# EUROPÄISCHE PATENTSCHRIFT

(11) **EP 0 872 148 B1**
(45) Veröffentlichungstag und Bekanntmachung des Hinweises auf die Patenterteilung: **17.04.2002**
(21) Anmeldenummer: 96946148.2
(22) Anmeldetag: 17.12.1996
(51) Int. Cl.: H04Q 7/38, H04B 7/26

(54) **VERFAHREN UND ANORDNUNG ZUM ÜBERTRAGEN VON DATEN IN EINEM ZELLULAREN FUNKSYSTEM**
PROCESS AND DEVICE FOR DATA TRANSMISSION IN A CELLULAR RADIO SYSTEM
PROCEDE ET DISPOSITIF POUR TRANSMETTRE DES DONNEES DANS UN SYSTEME RADIOTELEPHONIQUE CELLULAIRE

(30) Priorität: 04.01.1996 DE 19600197; 29.11.1996 DE 19649667
(43) Veröffentlichungstag der Anmeldung: 21.10.1998
(73) Patentinhaber: SIEMENS AKTIENGESELLSCHAFT, 80333 München (DE)
(72) Erfinder: MENZEL, Christian, D-82216 Maisach (DE)
(86) Internationale Anmeldenummer: DE9602431
(87) Internationale Veröffentlichungsnummer: WO9725827

(56) Entgegenhaltungen:
- EP-A- 0 530 165
- WO-A-94/01974
- WO-A-94/13113
- WO-A-94/29981

## Beschreibung

Die Erfindung bezieht sich auf ein Verfahren und eine Anordnung zum Übertragen von Daten in einem zellularen Funksystem. Weiterhin bezieht sich die Erfindung auf eine entsprechende Teilnehmerstation und Zentralstation.

Bei einem Mobilfunksystem ist üblicherweise eine zu versorgende Fläche in eine große Anzahl von Funkzellen eingeteilt. In diesen Funkzellen sind jeweils Basisstationen vorgesehen, über die die Verbindungen zwischen einem öffentlichen Telefonnetz und den Teilnehmerstationen der einzelnen Teilnehmer, beispielsweise Mobilstationen, in der jeweiligen Zelle hergestellt werden können. Ein derartiges Mobilfunksystem ist beispielsweise das vom European Telecommunication Standards Institute (ETSI) standardisierte GSM (Global System for Mobile Communication). Ein derartiges System ist beispielsweise in einer Broschüre "D 900 Mobile Communication System" SYD der Siemens AG, 1992 beschrieben. Ein ähnliches System ist das DCS 1800/PCN.

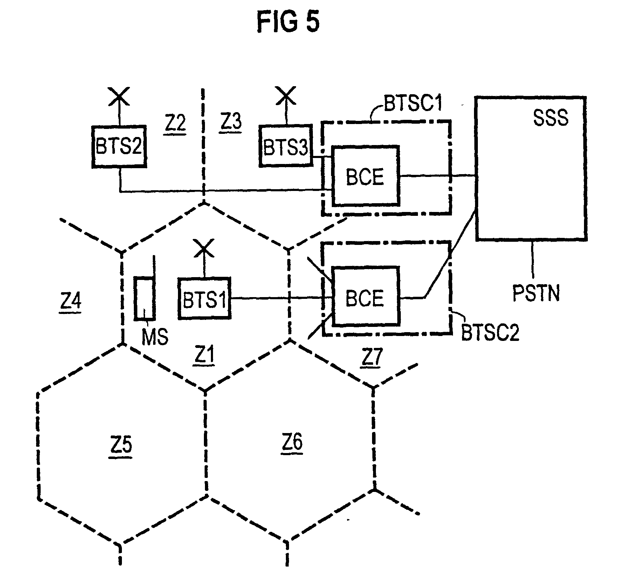

Bei dem in Fig. 5 dargestellten Mobilfunksystem ist ein Funkbereich entsprechend dem GSM-Standard in mehrere Zellen Z aufgeteilt, von denen in Fig. 5 nur die Zellen Z1 bis Z7 dargestellt sind. In einer Zelle Z wird der Telekommunikationsdienst von und zu einer Mobilstation MS durch eine Basisstation BTS bereitgestellt (BTS = Base Transceiver Station), die Teil einer Zentralstation ist. In der Fig. 6 sind lediglich die den Zellen Z1 bis Z3 zugeordneten Basisstationen BTS1 bis BTS3 dargestellt. Eine oder mehrere Basisstationen BTS sind mit einer Basis-Steuereinheit BTSC (BTSC = Base Station Controller) verbunden, von denen in Fig. 5 nur die Basis-Steuereinheiten BTSC1 und BTSC2 dargestellt sind. Die Basis-Steuereinheiten BTSC führen die lokalen Funktionen der Rufvermittlung, Überwachung und Wartung durch. Sie umfassen insbesondere Steuereinheiten BCE (Base Station Control Equipment). Mehrere Basis-Steuereinheiten BTSC sind mit einer Vermittlungseinrichtung SSS (SSS = Switching Sub System) verbunden, die ihrerseits mit dem öffentlichen Netz PSTN (PSTN = Public Switched Telefone Network) verbunden ist, das als ISDN-Netz, als Mobilfunknetz oder als sonstiges Telefon- oder Datennetz ausgebildet sein kann.

Falls ein Teilnehmer mittels einer Mobilstation MS in der Zelle Z1 mit einem anderen Teilnehmer kommunizieren will, wird über die Basisstation BTS1 mit der Basis-Steuereinheit BTSC1 ein vorgegebenes Protokoll abgewickelt, das beispielsweise in dem obengenannten GSM-Standard festgelegt ist. Wenn die Verbindung zwischen der Mobilstation MS und der Basis-Steuereinheit BTSC1 hergestellt ist, wird über die Vermittlungseinrichtung SSS eine Verbindung zum öffentlichen Netz PSTN hergestellt. Von diesem aus wird dann der andere Teilnehmer, der wiederum mit einer Mobilstation versehen sein kann, erreicht.

Beim GSM erfolgt die Übertragung der Signale üblicherweise nach dem sogenannten TDMA(Time Division Multiple Access)-Verfahren in einem Frequenz- und Zeitvielfachzugriff. Bei diesem Verfahren werden die Daten, die auch digitalisierte Sprache darstellen können, über Zeitschlitze eines TDMA-Rahmens übertragen.

Während der Übertragung beobachtet die Mobilstation die Funkfeldbedingungen der benachbarten Basisstationen, damit auf der Basis dieser Messungen gegebenenfalls eine Übergabe (Handover) zu einer anderen Basisstation durchgeführt werden kann.

Um höhere Datenraten bei der Übertragung zwischen der Mobilstation und dem Netz zu erreichen, können mehrere Zeitschlitze des TDMA-Rahmens für dieselbe Verbindung benutzt werden. Damit verkürzt sich jedoch die Zeitdauer, in der eine Mobilstation die benachbarten Basisstationen beobachten kann. Wenn beispielsweise alle Zeitschlitze eines TDMA-Rahmens für eine Verbindung benutzt werden, ist eine Beobachtung der benachbarten Basisstationen sogar völlig unmöglich. Um dennoch die Beobachtung sicherzustellen, wäre es denkbar, zur Überwachung der benachbarten Basisstationen in der Mobilstation einen zweiten Empfänger vorzusehen, der insbesondere für die Beobachtung der benachbarten Basisstationen dient. Eine derartige Lösung hat jedoch den Nachteil, daß sie einen verhältnismäßig großen Aufwand und zusätzliche Kosten erfordert und darüber hinaus die Mobilstation hinsichtlich ihres Volumens vergrößert.

Aus der EP 662 778 A2 ist der Asynchrone Transfer Mode (ATM) zur Datenübertragung von fest vorgegebenen Datenpaketen beim Mobilfunk bekannt. Die Überwachung von Nachbarzellen in einem zellularen System werden bei dieser bekannten Übertragung nicht angesprochen.

Weiterhin ist in der WO 91-2436 A1 beschrieben, daß bei einem zellularen Mobilfunksystem in jeder Basisstation Einrichtungen vorgesehen sind, die zeitweilige Pausen der Übertragung zwischen der Basisstation und der Mobilstation erkennen und während dieser Pausen Signalisierungen mit der Mobilstation veranlassen.

Der Erfindung liegt die Aufgabe zugrunde, ein Verfahren und eine Anordnung anzugeben, mittels denen auf einfache Weise und kostengünstig eine Verbindung auf mehreren Zeitschlitzen hergestellt wird und dennoch die Verwendung eines zweiten Empfängers in der Mobilstation vermieden wird.

Erfindungsgemäß wird die Aufgabe bei dem Verfahren durch die im Patentanspruch 1 an gegebenen Maßnahmen gelöst. Eine Anordnung, eine Basisstation und eine Mobilstation zur Durchführung des Verfahrens sind in den Patentansprüchen 8, 9 bzw. 10 angegeben. Weiterbildungen der Erfindung ergeben sich aus den Unteransprüchen.

Ein Ausführungsbeispiel der Erfindung wird im folgenden anhand von Zeichnungen näher erläutert. Es zeigen:
- Fig. 1: eine schematische Darstellung von zu übertragenden Daten,
- Fig. 2: die Struktur eines Zeitschlitzrahmens,
- Fig. 3: die Struktur eines aus mehreren Zeitschlitzrahmen gebildeten Rahmens,
- Fig. 4: eine dreidimensionale schematische Darstellung von über mehrere Zeitschlitze eines Zeitschlitzrahmens gleichzeitig übertragenen Daten, wobei die Datenrate bei der Übertragung jeweils kurzzeitig reduziert wird, und
- Fig. 5: ein Blockbild eines Mobilfunksystems.

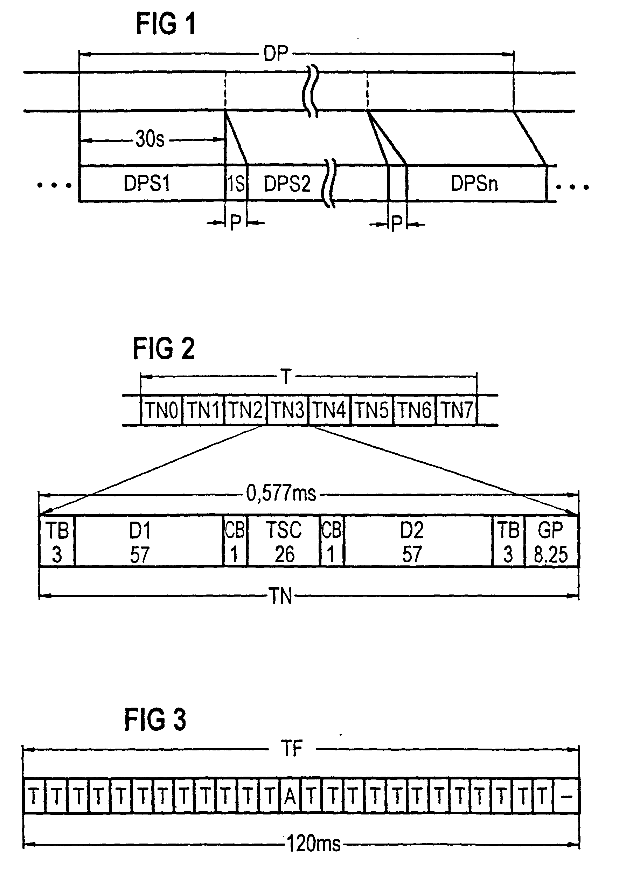

Die Darstellung in Fig. 1 zeigt schematisch ein auf der Luftschnittstelle zwischen der Mobilstation und der Basisstation zu übertragendes Datenpaket DP. Dieses Datenpaket DP wird in Datenpaket-Segmente DPS1 bis DPSn aufgeteilt, deren Übertragungsdauer beispielsweise 30s oder kürzer ist und die durch Pausen P von beispielsweise 1s voneinander getrennt sind. Diese Datenpaket-Segmente DPS werden mittels eines entsprechenden Übertragungsprotokolls, beispielsweise das sogenannte modifizierte RLP (Radio Link Protokol), über mehrere, beispielsweise bis zu acht, Zeitschlitze eines TDMA-Rahmens auf einer Frequenz gleichzeitig übertragen.

In Fig. 2 ist die Struktur eines GSM-Zeitschlitzrahmens (TDMA Frame) T mit acht Zeitschlitzen TN0 bis TN7 dargestellt, wobei ein Zeitschlitzrahmen eine Dauer von 4,615ms besitzt. Jeder Zeitschlitz hat eine Dauer von ca. 0,577ms bzw. 156,25 Bits. Den physikalischen Inhalt eines Zeitschlitzes bezeichnet man als Burst. Vier verschiedene Bursttypen existieren in diesem System:
1. Normalburst (Normal Burst): Dieser Burst wird benutzt, um Daten, Sprach- oder Kontrollinformationen zu übertragen.
2. Frequenzkorrekturburst (Frequency Correction Burst): Dieser Burst wird für die Frequenzsynchronization der Mobilstation benutzt.
3. Synchronizationsburst (Synchronization Burst): Dieser Burst wird für die Rahmensynschronisation der Mobilstation benutzt.
4. Zugriffsburst (Access Burst): Dieser Burst wird für den Erstzugriff der Mobilstation und bei einem Weiterreichen (Handover) der Mobilstation benutzt.

Ein Normalburst TN mit einer Dauer von 0,577ms ist in Fig. 2 vergrößert dargestellt. Er enthält 114 verschlüsselte oder unverschlüsselte Informationsbits, je nachdem, ob eine Verschlüsselungsfunktion ein- oder ausgeschaltet ist. Diese Bursts sind in zwei Halbburst D1 und D2 mit jeweils 57 Bits aufgeteilt. In der Mitte des Normalbursts befindet sich eine 26 Bit lange Einstellfolge (Training Sequence) TSC, die dazu dient, den Kanal auszumessen und/oder die Kanalimpulsantwort des Übertragungskanals zu schätzen. Zu beiden Seiten der Einstellfolge TSC befindet sich jeweils ein Steuerbit CB, welches anzeigt, ob der Normalburst Daten oder Kontrollinformationen enthält. Ein Normalburst beginnt und endet jeweils mit drei definierten Zusatzbits (Tail Bits) TB. Ein Normalburst schließt mit einer Schutzzeit (Guard Period) GP von 8,25 Bits ab.

Die Verkehrsdatenkanäle im GSM sind in einem Rahmen TF, bestehend aus 26 Zeitschlitzrahmen (26-frame-multiframe), angeordnet, wie er in Fig. 3 dargestellt ist. In zwölf aufeinanderfolgenden Zeitschlitzenrahmen T, nämlich den Zeitschlitzrahmen 0 bis 11 und Zeitschlitzrahmen 13 bis 24 werden Daten, digitalisierte Sprache oder Kontrollinformationen gesendet. Der Zeitschlitzrahmen 12 dient zur Übertragung von Steuerinformationen A, wie z.B. Parameter für die adaptive Leistungsregelung der entsprechenden Mobilstation, Frequenzen der Nachbarzellen, usw. und zellspezifischen Informationen. Im Zeitschlitzrahmen 25 werden keine Daten übertragen.

Der in Fig. 3 dargestellte Rahmen TF entspricht einer Dauer von 120ms. In 24 der 26 Zeitschlitzrahmen T kann somit Nutzinformation übertragen werden. Da in jedem Zeitschlitz TN 114 Bits (Normalburst) übertragen werden können, werden also während eines 120ms langen Rahmens 114 x 24 = 2736 Informationsbits übertragen. Dies entspricht einer Bruttodatenrate von 22,8 kbit/s.

Aus 51 solcher Rahmen TF wird für die Übertragung von Nutzinformation ein Superrahmen mit einer Dauer von 6,12s gebildet und 2048 derartige Superrahmen bilden einen Hyperrahmen mit einer Dauer von 3h 28m 53s 760s.

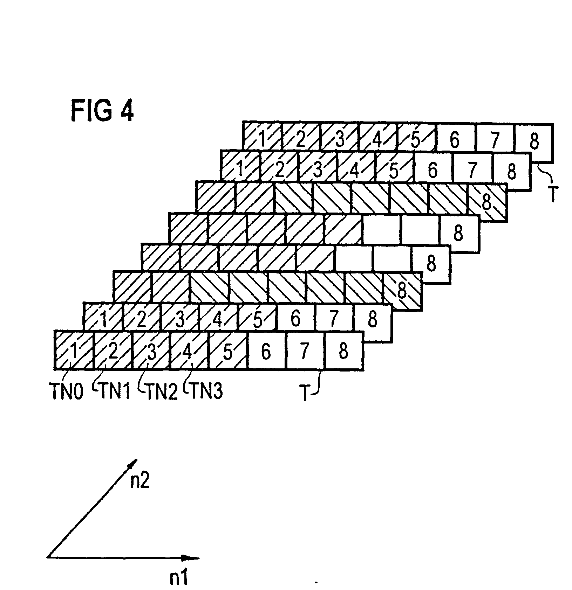

Wenn die Rahmen T aus Gründen der Anschaulichkeit nicht nebeneinander, sondern graphisch hintereinander dargestellt werden, ergibt sich die Darstellung nach Fig. 4. Dort sind in einer Zeitachse n1 die Zeitschlitze TN der Zeitschlitzrahmen T und in einer anderen Zeitachse n2 die aufeinanderfolgenden Zeitschlitzrahmen T hintereinander dargestellt.

Wenn die Daten der Datenpaket-Segmente DPS nicht über jeweils einen Zeitschlitz eines Zeitschlitzrahmens T, sondern über mehrere Zeitschlitze TN eines Zeitschlitzrahmens T gleichzeitig auf derselben Frequenz übertragen werden, wird die Datenübertragungsrate entsprechend erhöht. Bei der Darstellung wird beispielhaft angenommen, daß die Übertragung gleichzeitig über die fünf Zeitschlitze TN0 bis TN3 erfolgt, was durch eine Schraffur von links unten nach rechts oben verdeutlicht ist. In Fig. 4 ist nur die Richtung von der Basisstation BTS zur Mobilstation MS (downlink) dargestellt. Die Übertragungen in den beiden Richtungen sind um drei Zeitschlitze TN gegeneinander versetzt. Wenn nur jeweils ein Zeitschlitz TN für eine Verbindung benutzt wird, verbleibt dazwischen hinreichend Zeit, die Basisstationen der Nachbarzellen zu beobachten. Wenn jedoch die Übertragung der Daten parallel in mehreren Zeitschlitzen TN gleichzeitig erfolgt, verbleibt keine Zeit mehr für die Nachbarzellen-Beobachtung.

Falls die Übertragungsdauer jedes Datenpaket-Segments DPS mit hoher Übertragungsrate zeitlich begrenzt wird, können die in Fig. 1 dargestellten Zeitintervalle P zwischen den Übertragungen der aufeinanderfolgenden Datenpaket-Segmente DPS für die Beobachtung der Nachbarzellen genutzt werden. Ein Aufund Abbau der Verbindung ist beim Senden von Daten zur Mobilstation MS zum Zweck der Leitweglenkung und zur Vermeidung von Handovern während der Datenübertragung ohnehin zweckmäβig.

Die Zeitdauer der in Fig. 1 dargestellten Datenpaket-Segmente DPS beträgt beispielsweise 30s. Damit ist sichergestellt, daß spätestens nach beispielsweise jeweils 30s eine Nachbarzellenbeobachtung erfolgt. Dies entspricht der Zeitdauer, nach der beim GSM eine Zellenauswahl (Cell-Reselection) durchgeführt wird wenn sich die Mobilstation MS in einem Batteriesparmodus oder in einem Leerlaufmodus befindet. Das Verhalten und die Erreichbarkeit der Mobilstation MS werden dadurch nicht negativ beeinflußt. Außerdem wird die Netto-Datenrate nur geringfügig reduziert. Von Bedeutung ist jedoch insbesondere, daß auf die angegebene Weise ein zweiter Empfänger in der Mobilstation MS nicht erforderlich ist.

Anstelle der Überwachung aller benachbarter Basisstationen BTS nach jeweils einem Datenpaket-Segment DPS mit der Zeitdauer von 30s können auch die benachbarten Basisstationen BTS nach jeweils einer kürzeren Zeitdauer in dem Zeitintervall P nacheinander überwacht werden. Auch dann ist sichergestellt, daß nach jeweils einer vorgegebenen Zeitdauer alle benachbarte Basisstationen BTS funktechnisch überwacht werden.

Bei der Darstellung in Fig. 4 wird während der laufenden Verbindung kurzzeitig die Datenübertragungsrate reduziert. Die Zeitschlitzrahmen, in denen dies erfolgt sind durch eine Schraffur von links unten nach rechts oben gekennzeichnet. Hierzu wird die Anzahl der Zeitschlitze TN, die für die Datenübertragung benutzt werden kurzzeitig reduziert. Beispielsweise wird die Datenübertragung während eines oder weniger Zeitschlitzrahmen T reduziert. Damit steht ausreichend Zeit für die Gewinnung der Meßwerte zur Verfügung.

Bei der Darstellung in Fig. 4 sind für die normale Datenübertragung beispielsweise jeweils fünf Zeitschlitze TN vorgesehen. Wenn eine Überwachung der Nachbarzellen erfolgen soll, wird die Anzahl der Zeitschlitze TN während eines Zeitintervalls auf beispielsweise zwei reduziert, so daß nur noch auf den Zeitschlitzen TN0 und TN1 übertragen wird. Die Reduzierung der Anzahl der für die Übertragung benutzten Zeitschlitze TN kann dabei nach einem fest vereinbarten Schema geschehen, wobei dann das vereinbarte Schema beispielsweise durch die Signalisierung übertragen wird. Die Reduzierung kann auch jeweils von der Mobilstation MS je nach Erfordernis vorgenommen werden. In diesem Fall kann ein Sicherungsprotokoll erforderlich sein, welches den Verlust der wegen der Überwachung einer Nachbarzelle nicht empfangenen Daten detektiert und gegebenenfalls deren Wiederholung anfordert. Die Daten werden daher üblicherweise in Datenblöcken übertragen, welche ihrerseits wieder (z.B. durch das sogenannte Interleaving) auf mehrere Bursts verteilt sein können.

Für die Überwachung der Nachbarzellen werden vorzugsweise Zeitschlitze gewählt, die zur Übertragung von Bursts eines Blockes genutzt werden können. Dadurch wird die Zahl der gestörten Blöcke reduziert. Beim fest vereinbarten Schema sind derartige Vorkehrungen nicht erforderlich, da die Sende- und die Empfangsseite jeweils a priori wissen, zu welchen Zeiten die Mobilstation MS in bestimmten Zeitschlitzen TN nicht empfangsbereit ist.

Die Übertragung kann auch mit einer dynamischen Lastverteilung kombiniert sein, bei der die zu übertragenden Datenblöcke derart auf die zu den verschiedenen Kanälen gehörenden Zeitschlitze TN verteilt werden, daß über Kanäle mit hoher Übertragungsgüte, wenigen Wiederholungen und damit einem hohen Datendurchsatz mehr Datenblöcke übertragen werden als über Kanäle mit geringer Übertragungsgüte und weniger Datendurchsatz. Ein Kanal, dessen Zeitschlitze TN für die Überwachung der Nachbarzellen benutzt werden, besitzt im Fall des vereinbarten Schemas einen a priori bekannten Datendurchsatz und erscheint im Fall der Überwachung nach Erfordernis als Kanal mit schlechter Übertragungsgüte und damit ebenfalls geringem Datendurchsatz.

Der Lastverteilungsmechanismus, der beispielsweise ein für Mehrfachschlitz-Übertragungen modifiziertes Verbindungsprotokoll sein kann, verteilt die zu übertragenden Daten entsprechend dem möglichen Datendurchsatz auf die zu einer Verbindung gehörenden Verkehrskanäle.

## Patentansprüche

1. Verfahren zum Übertragen von Daten (DP) in einem zellularen Funksystem zwischen einer in einer Zelle (Z) vorgesehenen Basisstation (BTS) und einer Mobilstation (MS) in Zeitschlitzen (TN) eines Zeitmultiplexrahmens (T) entsprechend einem Zeitmultiplexverfahren,
bei dem während der Übertragung der Daten (DP) die Basisstationen (BTS) in benachbarten Zellen funktechnisch überwacht werden,
**dadurch gekennzeichnet,**
**daß** nach jeweils einer vorgegebenen Zeitdauer während der Übertragung der Daten (DP) ein vorgegebenes Zeitintervall (P) vorgesehen wird, während dem die Übertragung über eine verminderte Anzahl von Zeitschlitzen (TN) erfolgt, daß während dieses Zeitintervalls (P) jeweils die Basisstationen (BTS) von benachbarten Zellen (Z) funktechnisch überwacht werden und daß nach Ablauf dieses Zeitintervalls (P) die Übertragung der Daten wieder mit der ursprünglichen Datenrate fortgesetzt wird.

2. Verfahren nach Anspruch 1,
**dadurch gekennzeichnet,**
**daß** die Anzahl der Zeitschlitze (TN), während der eine verminderte Übertragung der Daten erfolgt, kleiner ist als die Anzahl der Zeitschlitze (TN) der Übertragung von und zu den Mobilstationen (MS) mit unverminderter Datenrate.

3. Verfahren nach Anspruch 1 oder Anspruch 2,
**dadurch gekennzeichnet,**
**daß** während jedes Zeitintervalls (P) alle Basisstationen (BTS) in den benachbarten Zellen (Z) funktechnisch überwacht werden.

4. Verfahren nach einem der Ansprüche 1 oder Anspruch 2,
**dadurch gekennzeichnet,**
**daß** während aufeinanderfolgender Zeitintervalle (P) die Basisstationen (BTS) in den benachbarten Zellen (Z) nacheinander funktechnisch überwacht werden.

5. Verfahren nach einem der vorangehenden Ansprüche,
**dadurch gekennzeichnet,**
**daß** die Anzahl der Zeitschlitze (TN), die für eine Übertragung der Daten mit der hohen Datenrate benutzt werden nach einem zwischen der Basisstation und der Mobilstation vereinbarten Schema festgelegt wird.

6. Verfahren nach Anspruch 5,
**dadurch gekennzeichnet,**
**daß** das vereinbarte Schema durch die Signalisierung übertragen wird.

7. Verfahren nach einem der vorangehenden Ansprüche,
**dadurch gekennzeichnet,**
**daß** die Reduzierung der Zeitschlitze während des Zeitintervalls von der Mobilstation (MS) je nach Erfordernis vorgenommen wird.

8. Anordnung zur Durchführung des Verfahrens nach Anspruch 1 mit einer Basisstation (BTS) und zumindest einer Mobilstation (MS),
**dadurch gekennzeichnet,**
**daß** Einrichtungen vorgesehen sind, die nach jeweils einer vorgegebenen Zeitdauer während der Übertragung der Daten (DP) ein vorgegebenes Zeitintervall (P) vorsehen, während dem die Übertragung über eine verminderte Anzahl von Zeitschlitzen (TN) erfolgt, die während dieses Zeitintervalls (P) jeweils die Basisstationen (BTS) von benachbarten Zellen (Z) funktechnisch überwachen und die nach Ablauf dieses Zeitintervalls (P) die Übertragung der Daten wieder mit der ursprünglichen Datenrate fortsetzen.

9. Basisstation (BTS) zum Übertragen von Daten (DP) in einem zellularen Funksystem in Zeitschlitzen (TN) eines Zeitmultiplexrahmens (T) entsprechend einem Zeitmultiplexverfahren,
**dadurch gekennzeichnet,**
**daß** sie Einrichtungen enthält, die nach jeweils einer vorgegebenen Zeitdauer während der Übertragung der Daten (DP) ein vorgegebenes Zeitintervall (P) vorsehen, während dem die Übertragung über eine verminderte Anzahl von Zeitschlitzen (TN) erfolgt und die nach Ablauf dieses Zeitintervalls (P) die Übertragung der Daten wieder mit der ursprünglichen Datenrate fortsetzen.

10. Mobilstation (MS) zum Übertragen von Daten (DP) in einem zellularen Funksystem in Zeitschlitzen (TN) eines Zeitmultiplexrahmens (T) entsprechend einem Zeitmultiplexverfahren,
**dadurch gekennzeichnet,**
**daß** sie Einrichtungen enthält, die während der Zeitintervalle (P), während denen die Daten mit verminderter Datenrate übertragen werden die Basisstationen (BTS) in den benachbarten Zellen (Z) funktechnisch überwachen.

## Claims

1. Method for transmitting data (DP) in a cellular radio system between a base transceiver station (BTS) provided in a cell (Z) and a mobile station (MS) in time slots (TN) of a time division multiplex frame (T) in accordance with a time division multiplex method,
in which the base transceiver stations (BTS) in adjacent cells are subjected to radio monitoring during the transmission of the data (DP),
**characterized in that**, after in each case a predetermined period of time during the transmission of the data (DP), a predetermined time interval (P) is provided during which the transmission takes place over a reduced number of time slots (TN), **in that** during this time interval (P), the base transceiver stations (BTS) of adjacent cells (Z) are in each case subjected to radio monitoring, and **in that** the transmission of the data is continued again at the original data rate after this time interval (P) has elapsed.

2. Method according to Claim 1,
**characterized in that** the number of time slots (TN) during which a reduced transmission of the data takes place, is smaller than the number of time slots (TN) of the transmission to and from the mobile stations (MS) when the data rate is not reduced.

3. Method according to Claim 1 or Claim 2,
**characterized in that** all the base transceiver stations (BTS) in the adjacent cells (Z) are subjected to radio monitoring during each time interval (P).

4. Method according to one of Claims 1 or Claim 2,
**characterized in that** the base transceiver stations (BTS) in the adjacent cells (Z) are successively subjected to radio monitoring during successive time intervals (P).

5. Method according to one of the preceding Claims,
**characterized in that** the number of time slots (TN) used for a transmission of the data at the high data rate is defined in accordance with a scheme agreed between the base transceiver station and the mobile station.

6. Method according to Claim 5,
**characterized in that** the agreed scheme is transmitted by the signalling.

7. Method according to one of the preceding Claims,
**characterized in that** the reduction in time slots during the time interval is carried out by the mobile stations in dependence on requirement (MS).

8. Arrangement for carrying out the method according to Claim 1, comprising a base transceiver station (BTS) and at least one mobile station (MS),
**characterized in that** devices are provided which provide after in each case a predetermined period of time during the transmission of the data (DP), a predetermined time interval (P) during which the transmission takes place over a reduced number of time slots (TN), which in each case subject the base transceiver stations (BTS) of adjacent cells (Z) to radio monitoring during this time interval (P), and which again continue the transmission of the data at the original data rate after this time interval (P) has elapsed.

9. Base transceiver station (BTS) for transmitting data (DP) in a cellular radio system in time slots (TN) of a time division multiplex frame (T) in accordance with a time division multiplex method,
**characterized in that** it contains devices which provide after in each case a predetermined period of time during the transmission of the data (DP), a predetermined time interval (P) during which the transmission takes place over a reduced number of time slots (TN), and which again continue the transmission of the data at the original data rate after this time interval (P) has elapsed.

10. Mobile station (MS) for transmitting data (DP) in a cellular radio system in time slots (TN) of a time division multiplex frame (T) in accordance with a time division multiplex method,
**characterized in that** it contains devices which subject the base transceiver stations (BTS) in the adjacent cells (Z) to radio monitoring during the time interval (P) during which the data are transmitted at a reduced data rate.

## Revendications

1. Procédé de transmission de données (DP) dans un système de radiocommunication cellulaire, entre une station de base (BTS) prévue dans une cellule (Z) et une station mobile (MS), dans des créneaux temporels (TN) d'une trame à multiplexage temporel (T) selon un procédé de multiplexage temporel,
dans lequel, pendant la transmission des données (DP), on surveille au niveau de la technique radio les stations de base (BTS) dans des cellules voisines,
**caractérisé par le fait que**
pendant la transmission des données (DP), on prévoit après respectivement une durée prédéterminée, un intervalle de temps prédéterminé (P) pendant lequel la transmission s'effectue par l'intermédiaire d'un nombre réduit de créneaux temporels (TN), pendant cet intervalle de temps (P), on surveille respectivement au niveau de la technique radio les stations de base (BTS) de cellules voisines (Z) et, après l'écoulement de cet intervalle de temps (P), on reprend la transmission des données avec le débit de données initial.

2. Procédé selon la revendication 1,
**caractérisé par le fait que** le nombre des créneaux temporels (TN) pendant lesquels il s'effectue une transmission réduite des données est plus petit que le nombre des créneaux temporels (TN) de la transmission en provenance et en direction des stations mobiles (MS) avec un débit de données non réduit.

3. Procédé selon la revendication 1 ou 2,
**caractérisé par le fait que**, pendant chaque intervalle de temps (P) , on surveille au niveau de la technique radio toutes les stations de base (BTS) dans les cellules voisines (Z).

4. Procédé selon la revendication 1 ou 2,
**caractérisé par le fait que**, pendant des intervalles de temps (P) successifs, on surveille au niveau de la technique radio successivement les stations de base (BTS) dans les cellules voisines (Z).

5. Procédé selon l'une des revendications précédentes,
**caractérisé par le fait qu'**on fixe le nombre des créneaux temporels (TN), qui sont utilisés pour une transmission des données avec le débit de données élevé, selon un schéma convenu entre la station de base et la station mobile.

6. Procédé selon la revendication 5,
**caractérisé par le fait qu'**on transmet le schéma convenu au moyen de la signalisation.

7. Procédé selon l'une des revendications précédentes,
**caractérisé par le fait que** la réduction des créneaux temporels pendant l'intervalle de temps est effectuée par la station mobile (MS) selon les besoins.

8. Dispositif pour la mise en oeuvre du procédé selon la revendication 1, comportant une station de base (BTS) et au moins une station mobile (MS),
**caractérisé par le fait qu'**il est prévu des dispositifs qui prévoient, pendant la transmission des données (DP) et après respectivement une durée prédéterminée, un intervalle de temps prédéterminé (P) pendant lequel la transmission s'effectue par l'intermédiaire d'un nombre réduit de créneaux temporels (TN), qui, pendant cet intervalle de temps (P), surveillent respectivement au niveau de la technique radio les stations de base (BTS) de cellules voisines (Z) et qui, après l'écoulement de cet intervalle de temps (P), reprennent la transmission des données avec le débit de données initial.

9. Station de base (BTS) pour la transmission de données (DP) dans un système de radiocommunication cellulaire dans des créneaux temporels (TN) d'une trame à multiplexage temporel (T) selon un procédé de multiplexage temporel,
**caractérisée par le fait qu'**elle contient des dispositifs qui prévoient, pendant la transmission des données (DP) et après respectivement une durée prédéterminée, un intervalle de temps prédéterminé (P) pendant lequel la transmission s'effectue par l'intermédiaire d'un nombre réduit de créneaux temporels (TN), et qui, après l'écoulement de cet intervalle de temps (P), reprennent la transmission des données avec le débit de données initial.

10. Station mobile (MS) pour la transmission de données (DP) dans un système de radiocommunication cellulaire dans des créneaux temporels (TN) d'une trame à multiplexage temporel (T) selon un procédé de multiplexage temporel,
**caractérisée par le fait qu'**elle contient des dispositifs qui, pendant l'intervalle de temps (P) pendant lequel les données sont transmises avec un débit de données réduit, surveillent à chaque fois au niveau de la technique radio les stations de base (BTS) dans les cellules voisines (Z).
